# EUROPÄISCHE PATENTSCHRIFT

(11) **EP 2 999 897 B1**
(45) Veröffentlichungstag und Bekanntmachung des Hinweises auf die Patenterteilung: **01.11.2017**
(21) Anmeldenummer: 14734820.5
(22) Anmeldetag: 02.07.2014
(51) Int. Cl.: F16D 55/224, B61H 5/00, B61H 13/38, F16D 66/00

(54) **BREMSVORRICHTUNG**
BRAKING SYSTEM
SYSTÈME DE FREINAGE

(30) Priorität: 11.07.2013 DE 102013213618
(43) Veröffentlichungstag der Anmeldung: 30.03.2016
(73) Patentinhaber: Siemens Aktiengesellschaft, 80333 München (DE)
(72) Erfinder: ROTHFUSS, Patrick, 85399 Hallbergmoos (DE); SCHAUTT, Martin, 80636 München (DE); SCHIFFERS, Toni, 41812 Erkelenz (DE)
(86) Internationale Anmeldenummer: PCT/EP2014/064088
(87) Internationale Veröffentlichungsnummer: WO 2015/003975

(56) Entgegenhaltungen:
- DE-A1- 4 206 342
- DE-A1-102009 051 352
- DE-C1- 4 425 598
- FR-A1- 2 347 246

## Beschreibung

Die Erfindung betrifft eine Bremsvorrichtung mit beiderseits eines Bremsorgans angeordneten Bremsbelaghalte-Einrichtungen, die jeweils mittels einer Hängelasche aufgehängt sind.

Eine als Scheibenbremsvorrichtung ausgeführte Bremsvorrichtung dieser Art ist beispielsweise in der internationalen Patentanmeldung WO 2007/115738 A1 beschrieben. Eine derartige Bremsvorrichtung hat den Vorteil, dass die Hängelaschen das Bremsmoment aufnehmen und dazu ohne Momenteinleitung in die Bremszangenhebel direkt in die Bremsenaufhängung leiten, so dass keine Momenteinleitung in die Bremszangenhebel erfolgt. Dadurch können die Bremszangenhebel hinsichtlich der auftretenden Belastung durch die Zuspannkräfte optimiert werden. Bei Scheibenbremsvorrichtungen ohne Hängelaschen hingegen müssen die in den Bremszangenhebeln auftretenden Belastungen allein von den Bremshebeln aufgenommen werden. Dies erfordert eine robuste und biegesteife Auslegung, die zu einem entsprechend großen Materialeinsatz führt, weil die Bremszange hinsichtlich ihrer Größe und ihres Gewichts entsprechend verstärkt ausgeführt werden muss. Ferner unterliegen bei Scheibenbremsvorrichtungen ohne Hängelaschen die Gelenke und Lager der Bremszange ungünstig großen Belastungen, die aus dem Bremsmoment resultieren. Dokument DE 42 06 342 A1 offenbart eine Bremsvorrichtung gemäß dem Oberbegriff vom Anspruch 1.

Der Erfindung liegt die Aufgabe zu Grunde, eine Bremsvorrichtung der eingangs angegebenen Art so weiter zu entwickeln, dass sie zuverlässige Eingangssignale für eine Bremssteuerungseinrichtung liefert.

Zur Lösung dieser Aufgabe ist bei einer Bremsvorrichtung der oben beschriebenen Art erfindungsgemäß die mindestens eine Hängelasche an ihrem von der Bremsbelag-Halteeinrichtung abgewandten Ende mit einem freien Ende eines Hebels verbunden, der an einer Anbringungseinrichtung der Bremsvorrichtung gelagert ist; zusätzlich ist eine Verbiegungen des Hebels erfassende Bremsmoment-Sensoreinrichtung vorhanden.

Es ist zwar aus der deutschen Patentschrift DE 10 2008 063 892 B4 eine Bremsanlage eines Schienenfahrzeugs bekannt, bei der zur Kompensation von Schwankungen der Reibbedingungen direkt das Bremsmoment gemessen wird, jedoch erfolgt hier die Messung des Bremsmoments an Verbindungsteilen zwischen dem Halter der Bremszangeneinheit und einem Drehgestell des Schienenfahrzeugs. An den genannten Verbindungsteilen ist eine kraftmessende Sensorik angebracht.

Ein wesentlicher Vorteil der erfindungsgemäßen Bremsvorrichtung besteht darin, dass auf vergleichsweise einfache Art und Weise mittels eines Hebels mit der Funktion eines Fühlhebels und einer Verbiegungen dieses Hebels erfassenden Bremsmoment-Sensoreinrichtung die Möglichkeit geschaffen ist, das Bremsmoment direkt und genau zu messen, indem die Verbiegungen des Hebels erfasst werden.

Bei der erfindungsgemäßen Bremsvorrichtung kann der Hebel unterschiedlich angeordnet und ausgeführt sein. Als vorteilhaft wird es angesehen, wenn der Hebel drehfest an der Anbringungseinrichtung befestigt ist und die Bremsmoment-SensorEinrichtung an dem Hebel zwischen dessen freien Ende und seiner Befestigungsstelle befestigt ist. Bei dieser Anordnung des Hebels kann aus dessen Verbiegungen direkt das Bremsmoment mit der Bremsmoment-Sensoreinrichtung ermittelt werden. Bei einer vorteilhaften Alternative könnte der Hebel Bestandteil der Anbringungseinrichtung sein oder in einem Rahmen der Bremsvorrichtung integriert sein.

Als vorteilhaft wird es ferner angesehen, wenn die Lagerung drehweich ist. Bei dieser Ausgestaltung der erfindungsgemäßen Bremsvorrichtung wird nahezu das gesamte Bremsmoment durch den Hebel abgefangen, so dass nur ein äußerst geringer Anteil des Bremsmoments über den Bremshebel aufgenommen wird. Je weniger Bremsmoment sich über den Bremshebel abstützt, desto besser kann der Bremshebel hinsichtlich der Übertragung der Zuspannkraft, des Materialeinsatzes und des Gewichts optimiert werden.

Die Bremsmoment-Sensoreinrichtung kann in unterschiedlicher Weise ausgebildet sein. Als besonders vorteilhaft wird es erachtet, wenn die Bremsmoment-Sensoreinrichtung ein Referenzelement aufweist, mit dem Verbiegungen des Hebels gegenüber dem Referenzelement feststellbar sind. Bei dieser Ausführungsform bedarf es beispielsweise lediglich zusätzlich zu dem Referenzelement einer Markierung auf dem Hebel, um dessen Verbiegungen gegenüber dem Referenzelement festzustellen und auszuwerten zu können.

Das Referenzelement kann an verschiedenen Stellen an dem Hebel angebracht sein. Als vorteilhaft wird es angesehen, wenn das Referenzelement einseitig in der Nähe der Lagerstelle des Hebels befestigt ist. Diese Befestigung des Referenzelementes hat nämlich den Vorteil, dass es gewissermaßen belastungsfrei angebracht ist und somit durch Betätigungen der Bremsvorrichtung nicht in seiner Position oder Ausrichtung verändert wird.

Vorteilhafterweise ist bei der erfindungsgemäßen Bremsvorrichtung zur Bildung der Bremsmoment-Sensoreinrichtung das Referenzelement an seinem freien Ende mit einem ersten Sensorelement und der Hebel mit einem weiteren Sensorelement derart versehen, dass eine dem jeweiligen Winkel zwischen dem Referenzelement und dem Hebel entsprechende Bremsmoment-Messgröße erzeugbar ist. Dabei liegt das weitere Sensorelement auf dem Hebel dem Sensorelement auf dem Referenzelement gewissermaßen gegenüber und erlaubt somit eine genaue Bestimmung der Verbiegung des Hebels.

Bei einer anderen Ausführungsform der erfindungsgemäßen Bremsvorrichtung ist der Hebel drehbar in dem Lager der Bremsvorrichtung gelagert und umfasst einen über sein Lager hinaus reichenden Hebelfortsatz, der an seinem Ende an der Anbringungseinrichtung abgestützt ist; die Verbiegungen des Hebels erfassende Bremsmoment-Sensoreinrichtung ist an dem Hebelfortsatz angebracht. Der besondere Vorzug dieser Ausführungsform besteht darin, dass die Bremsmoment-Sensoreinrichtung an dem Hebelfortsatz angebracht werden kann. Damit wird nicht nur der Anteil des Bremsmoments erfasst, der über die Hängelaschen übertragen wird, sondern auch der relativ geringe Anteil des Bremsmoments, der noch über die Bremshebel übertragen wird. Es kann auf diese Weise also das Gesamt-Bremsmoment gemessen bzw. ermittelt werden.

Bei dieser Ausführungsform der erfindungsgemäßen Bremsvorrichtung ist das Referenzelement einseitig in der Nähe des Lagers des Hebels auf dem Hebelfortsatz befestigt. Dabei ist der Hebel einerseits am Ende seines Hebelfortsatzes drehfest abgestützt und andererseits so angeordnet, dass die im vorderen Bereich des Hebels angreifenden Belastungen über die Hängelaschen an den Hebelfortsatz übertragen werden. Da das als Drehlager ausgebildete Lager fest mit der Anbringungseinrichtung der Bremsvorrichtung verbunden ist, stellt das Drehlager eine äußerst steife Anbindung dar, weshalb der Hebel bzw. der Hebelfortsatz im Bereich des Drehlagers den geringsten Verformungen unterliegen. Ein weiter Vorteil des Drehlagers besteht darin, dass das Drehlager selbst kein Moment abstützen kann, so dass sich die von der Bremse aufgefangenen Bremsmomente quasi gezwungenermaßen über den Hebel bzw. den Hebelfortsatz abstützen müssen.

Die Bremsmoment-Sensorvorrichtung kann bei Verwendung eines Hebels mit Hebelfortsatz entsprechend der Bremsmoment-Sensorvorrichtung für einen einseitig drehfest angeordneten Hebel ausgeführt sein, indem das Referenzelement an seinem freien Ende mit einem ersten Sensorteil und der Hebelfortsatz in der Nähe seines abgestützten Endes mit einem weiteren Sensorteil unter Bildung der Bremsmoment-Sensoreinrichtung derart versehen ist, dass eine dem jeweiligen Winkel zwischen dem Referenzelement und dem Hebelfortsatz entsprechende Bremsmoment-Messgröße erzeugbar ist.

Ferner wird es als vorteilhaft angesehen, wenn bei der erfindungsgemäßen Bremsvorrichtung das erste Sensorelement bzw. Sensorteil in das Referenzelement integriert ist, weil dies nicht nur fertigungstechnisch günstig ist, sondern auch eine geschützte Unterbringung dieses Bauteils darstellt.

Die Bremsmoment-Sensorvorrichtung kann in unterschiedlicher Weise ausgebildet sein. Als vorteilhaft wird es angesehen, wenn sie eine opto-elektronische Sensorvorrichtung oder eine Halleffekt-Sensorvorrichtung ist, weil diese Sensorvorrichtungen eine eingeführte Technik darstellen.

Wie oben bereits angeführt worden ist, ist bei einem Hebel mit Hebelfortsatz der Hebelfortsatz an seinem einen Ende drehfest abgestützt. Als vorteilhaft wird es in diesem Zusammenhang angesehen, wenn der Hebelfortsatz an diesem Ende mittels eines Kraftmessbolzens abgestützt ist, weil sich damit eine zusätzliche Messgröße zur Plausibilisierung des erfassten Bremsmoments gewinnen lässt. Außerdem können die beiden Messgrößen miteinander abgeglichen werden. Hochdynamische Bremsregelvorgänge können somit präzise umgesetzt werden.

Bei einer besonders vorteilhaften Ausführungsform der erfindungsgemäßen Bremsvorrichtung ist eine Bremszuspannkraft-Sensoreinrichtung vorgesehen, die eine dem Ausmaß des Verschwenkens einer Hängelasche in Bezug auf den Hebel entsprechende Bremszuspannkraft-Messgröße erzeugt. Damit ist die Möglichkeit geschaffen, eine Bremssteuereinrichtung mit einer weiteren wichtigen Messgröße zu beaufschlagen.

Die Bremszuspannkraft-Sensorvorrichtung kann unterschiedlich ausgebildet sein. Bevorzugt wird im Rahmen der erfindungsgemäßen Bremsvorrichtung ein Referenzteil, mit dem das Ausmaß des Verschwenkens der Hängelasche in Bezug auf den Hebel feststellbar ist.

Das Referenzteil kann bei der erfindungsgemäßen Bremsvorrichtung in unterschiedlicher Weise im Bereich der Hängelaschen angeordnet sein. Als vorteilhaft wird es angesehen, wenn das Referenzteil einseitig mit dem Hebel verbunden ist, vorzugsweise mit einer Aufnahmevorrichtung für die Hängelaschen.

In diesem Zusammenhang wird es auch als vorteilhaft erachtet, wenn das Referenzteil an seinem freien Ende mit einer ersten Sensoreinheit und die Hängelasche mit einer weiteren Sensoreinheit unter Bildung der Bremszuspannkraft-Sensorvorrichtung derart versehen ist, dass eine dem jeweiligen Winkel zwischen dem Referenzteil und der Hängelasche entsprechende Bremszuspannkraft-Messgröße erzeugbar ist. Damit ist dann auf relativ einfache Weise eine Bremszuspannkraft-Messgröße erzeugbar.

Es kann aber auch vorteilhaft sein, bei einer anderen Ausführungsform der erfindungsgemäßen Bremsvorrichtung mit einer Bremszuspannkraft-Sensorvorrichtung das Referenzteil einseitig an der Hängelasche anzubringen. In diesem Fall ist vorzugsweise das Referenzteil an seinem freien Ende mit der ersten Sensoreinheit und der Hebel mit der weiteren Sensoreinheit unter Bildung der Bremszuspannkraft-Sensorvorrichtung derart versehen, dass eine dem jeweiligen Winkel zwischen dem Referenzteil und der Hängelasche entsprechende Bremszuspannkraft-Messgröße erzeugbar ist.

Bei der erfindungsgemäßen Scheibenbremsvorrichtung kann die erste Sensoreinheit in das Referenzteil integriert sein, wodurch nicht nur die Herstellung der Bremsvorrichtung insgesamt vereinfacht, sondern auch ein Schutz des Referenzteils und der ersten Sensoreinheit gewonnen wird.

Die Bremszuspannkraft-Sensorvorrichtung kann in unterschiedlicher Weise ausgebildet werden; vorteilhaft erscheint der Einsatz einer opto-elektronischen Sensorvorrichtung oder einer Halleffekt-Sensorvorrichtung, weil diese Einrichtungen mit denen identisch sind, die bei der Bremsmoment-Sensorvorrichtung zum Einsatz kommen können.

Um die gewonnenen Messwerte in einfacher Weise nach draußen bzw. zu einer Bremssteuereinrichtung zu übertragen, sind die Bremsmoment-Sensoreinrichtung und/oder die Bremszuspannkraft-Sensorvorrichtung mit einer Funkeinheit versehen.

Die erfindungsgemäße Bremsvorrichtung kann verschiedene Ausführungen aufweisen. So wird es als vorteilhaft angesehen, wenn die Bremsvorrichtung als Klotzbremsvorrichtung ausgebildet ist, indem das Bremsorgan von der Lauffläche eines Rades gebildet ist.

Besonders vorteilhaft wird eine Bremsvorrichtung nach der Erfindung erachtet, die als Scheibenbremsvorrichtung ausgebildet ist, indem das Bremsorgan von einer Bremsscheibe gebildet ist.

Zur weiteren Erläuterung der Erfindung ist in
- Fig.1: eine Seitenansicht einer schematischen Darstellung eines Ausführungsbeispiels der erfindungsgemäßen Bremsscheibenvorrichtung in Form einer Scheibenbremsvorrichtung mit einem einarmigen, drehfest angebrachten Hebel, in
- Fig.2: ein weiteres Ausführungsbeispiel mit einem drehbar gelagerten Hebel mit einem Hebelfortsatz, in
- Fig.3: eine Seitenansicht auf eine im Bereich einer Hängelasche angebrachten Bremszuspannkraft-Sensorvorrichtung, in
- Fig.4: eine Draufsicht auf ein Ausführungsbeispiel einer erfindungsgemäßen Bremszuspannkraft-Sensorvorrichtung mit Referenzteil am Hebel und in
- Fig.5: ein ähnliches Ausführungsbeispiel der Bremszuspannkraft-Sensorvorrichtung mit einem Sensorteil auf der Hängelasche
dargestellt. In den Figuren sind übereinstimmende Elemente mit gleichen Bezugszeichen versehen.

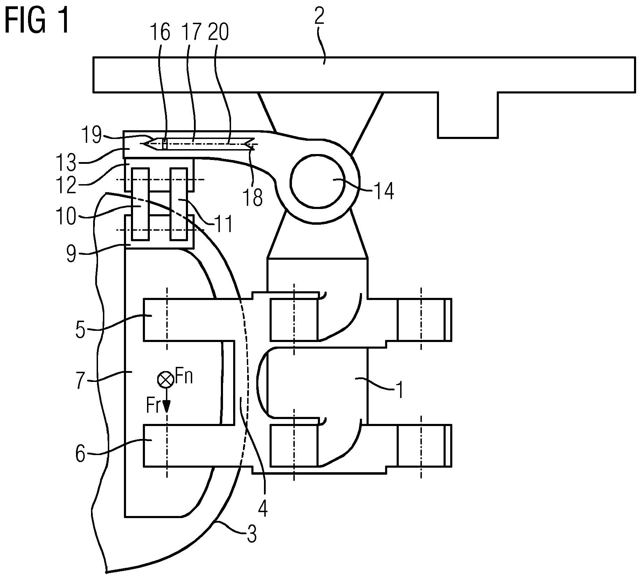

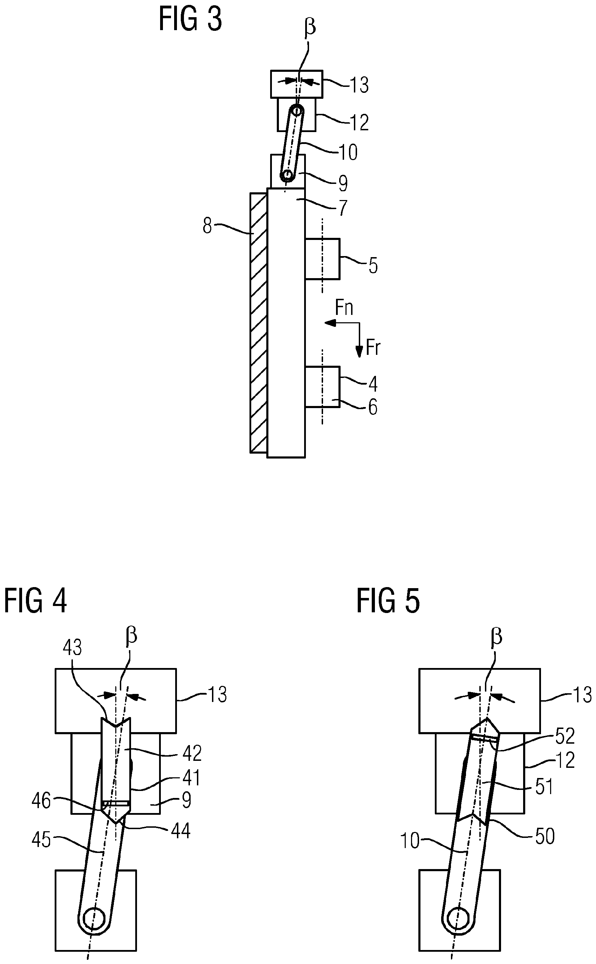

Die Figur 1 lässt eine Scheibenbremsvorrichtung mit einer Anbringungsvorrichtung 1 erkennen, die an einem Rahmen 2 eines nicht näher gezeigten Schienenfahrzeugs befestigt ist. Die Scheibenbremsvorrichtung weist neben einer Bremsscheibe 3 wenigstens einen Bremshebel 4 auf, der mit Lagerstellen 5 und 6 für eine Bremsbelag-Halteeinrichtung 7 versehen ist. Die Bremsbelag-Halteeinrichtung 7 trägt einen Bremsbelag 8 (siehe Fig. 3).

Die Bremsbelag-Halteeinrichtung 7 weist eine Aufnahme 9 für Hängelaschen 10 und 11 auf, die auch an ihrem in der Figur 1 oberen Ende an einer weiteren Aufhängevorrichtung 12 drehbar bzw. schwenkbar angebracht sind. Mit dieser weiteren Aufhängevorrichtung 12 und damit auch mit den Hängelaschen 10 und 11 ist ein Hebel 13 verbunden, der drehfest in einem Lager 14 auf der Anbringungsvorrichtung 1 und damit auch am Rahmen 2 gehalten ist. An dem Lager 15 ist drehweich die Anbringungsvorrichtung 2 angebracht.

Wie Figur 1 ferner zeigt, ist an dem Hebel 13 eine Bremsmoment-Sensoreinrichtung 16 vorgesehen, die ein zeigerförmiges Referenzelement 17 enthält. Dieses zeigerförmige Referenzelement 17 ist an einer Stelle 18 relativ dicht am Lager 14 des Hebels 13 angebracht, so dass es von Verbiegungen des Hebels 13 weitestgehend unbeeinflusst ist. Ein Ende 19 des Hebels 13 ist frei. Unterhalb des Referenzelementes 17 ist eine Markierung 20 auf dem Hebel 13 für den Fall vorgesehen, dass eine optische Erfassung von Verbiegungen des Hebels 13 erfolgt. Auf dem zeigerförmigen Referenzelement 17 befindet sich ein erstes Sensorelement 21, dem ein weiteres Sensorelement gegenüber liegt, das in Fig. 1 nicht erkennbar ist. Die Sensorelemente können unterschiedlich ausgebildet sein, so dass nach unterschiedlichen Erfassungskriterien ein dem Bremsmoment entsprechender Winkel zwischen den Sensorelementen erfassbar ist.

Aufgrund der Anbindung des Hebels 13 an die Anbringungsvorrichtung 2 kann der Hebel 13 das Bremsmoment aufnehmen, das durch die Reibkraft Fr erzeugt wird. Dabei stützt der Hebel 13 die Belag-Halteeinrichtung 7 entgegen dem Bremsmoment ab. Auf diese Weise trägt der Hebel 13 dazu bei, dass der Bremshebel 4 hinsichtlich der aus dem Bremsmoment resultierenden Belastung entlastet wird. Vorteilhafterweise wird dabei fast das gesamte Bremsmoment durch den Hebel 13 abgefangen, so dass nur ein äußerst geringer Anteil des Bremsmoments über den Bremshebel 4 aufgenommen werden muss. Durch die drehweiche Lagerung des Hebels 13 an der Anbringungseinrichtung 2 bzw. dem Rahmen 3 wird diese Wirkungsweise erreicht. Je weniger Bremsmoment sich auf den Bremshebel 4 abstützt, desto besser kann der Bremshebel 4 hinsichtlich der Übertragung der Bremszuspannkraft Fn, des Materialeinsatzes und des Gewichts optimiert werden.

In Abhängigkeit von der Größe des Bremsmoments bzw. der Reibkraft Fr verformt sich der Hebel 13 vornehmlich in Richtung der Reibkraft Fr. Diese Verformung wird als Maß für die vorherrschende Belastung genutzt.

Zur Erfassung des Bremsmoments wird die Verbiegung des Hebels 13 mit seiner Markierung 20 gegenüber dem Referenzelement 17 ermittelt, wobei in nicht dargestellter Weise vorteilhafterweise eine opto-elektronische Bremsmoment- Sensoreinrichtung verwendet wird. Wird eine lineare Steifigkeit des Hebels 13 unterstellt, so verbiegt sich der Hebel 13 mit zunehmender Belastung durch die Reibkraft Fr zunehmend linear. Aus der Verbiegung des Hebels 13 kann daher auf die Reibkraft Fr geschlossen werden, die multipliziert mit dem (konstanten) Radius r das Bremsmoments Mb ergibt.

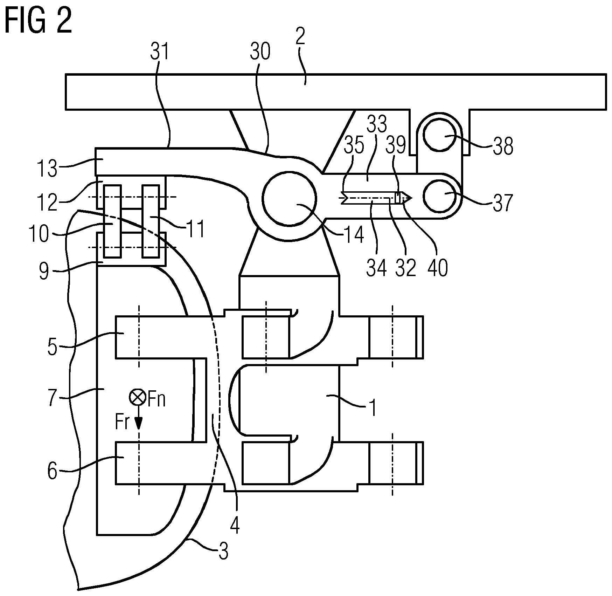

Bei der Ausführungsform nach Figur 2 ist ein Hebel 30 verwendet, der in derselben Weise, wie es in Figur 1 beschrieben ist, mit der oberen Aufhängevorrichtung 12 für die Hängelaschen 10 und 11 verbunden ist. Der in Figur 2 gezeigte linke Arm 31 des Hebels 30 ist frei von einer Bremsmoment-Sensoreinrichtung, weil diese Bremsmoment-Sensoreinrichtung 32 auf einem Hebelfortsatz 33 aufgebracht sind. Es sei jedoch angemerkt, dass eine zusätzliche Sensoreinrichtung am linken Arm 31 durchaus angebracht werden könnte. Ferner ist in Figur 2 zu erkennen, dass ein Referenzelement 34 auf dem Hebelfortsatz 33 aufgebracht ist, indem es mit seinem einen Ende 35 einseitig an dem Hebelfortsatz 33 in der Nähe des Lagers 14 des Hebels 13 befestigt ist. Unterhalb des Referenzelements 34 befindet sich wiederum eine Markierung 36 auf dem Hebelfortsatz 33. Die Lagerung des Hebels 30 ist hier als Drehlager 14 vorgenommen, wobei eine Abstützung des Hebelfortsatzes 33 des Hebels 13 an der Anbringungseinrichtung 2 mittels Befestigungsbolzen 37 und 38 vorgenommen ist. Der Hebel 13 ist somit einerseits drehfest abgestützt, da die Abstützung eine Drehung des Hebels 30 um sein Lager 14 verhindert. Da das Drehlager 14 die vom Hebel 13 aufgenommen Momente nicht abstützen kann, ist der Hebel 13 andererseits so angeordnet, dass die aus seinem vorderen Bereich angreifenden Belastungen, hervorgerufen durch die Reibkraft Fr, resultierenden Momente an den Hebelfortsatz 33 übertragen werden. Die Bremsmoment-Sensoreinrichtung 32 mit dem Referenzteil 34 kann somit das Bremsmoment ermitteln. Es ist lediglich eine entgegengesetzte Orientierung der Sensoreinrichtung im Vergleich zu dem Ausführungsbeispiel nach Figur 1 zu wählen mit Anordnung des Referenzelements 34 mit einem ersten Sensorelement 39 und einem weiteren Sensorelement 40 auf dem Hebelfortsatz 33 an Stellen minimaler bzw. großer Verformungen.

Da das als Drehlager ausgebildete Lager 14 fest mit der Anbringungsvorrichtung 2 verbunden ist, stellt auch dieses Lager 14 eine äußerst steife Anbindung dar, weshalb der Hebel 13 bzw. 30 und sein Fortsatz 33 im Bereich des Lagers 14 den geringsten Verformungen unterliegen.

Im Gegensatz zu dem Ausführungsbeispiel nach Figur 1 bietet die Anbringung der Bremsmoment-Sensorvorrichtung 32 am Hebelfortsatz 33 den Vorteil, dass nicht nur der Anteil des Bremsmoments erfasst wird, der über die Hängelaschen 10 und 11 übertragen wird, sondern auch der geringfügige Anteil des Bremsmoments, der noch über den Bremshebel 4 übertragen wird. Mit der Bremsmoment-Sensorvorrichtung 32 kann hier also nahezu das Gesamt-Bremsmoment ermittelt werden. Das Referenzelement 34 ist hier wiederum mit einem ersten Sensorelement 35 versehen, dem ein in Fig. 2 verdecktes weiteres Sensorelement auf dem Hebelfortsatz gegenüber liegt.

Da sich die in den Hebel 13 von den Hängelaschen 10 und 11 eingeleitete Belastung über den Hebelfortsatz 33 und die Abstützung an der Anbringungseinrichtung 2 abstützt, können auch die Befestigungsbolzen 37 und 38 als Messstellen zur Ermittlung der wirkenden Belastung dienen. Vorteilhafterweise lassen sich die Befestigungsbolzen 37 und/oder 38 durch Kraftmessbolzen ersetzen. Insofern können Messelemente verwendet werden, welche in den Verbindungsstellen wirkende Kräften bzw. Momente direkt erfassen. Somit sind auch andere Messprinzipien einsetzbar, so dass sich eine diversitär redundante Bremsmoment-Sensorik mit zusätzlicher Bremszuspannkraft-Sensoreinrichtung aufbauen lässt, wie die folgenden Ausführungen zeigen.

Nicht nur aber insbesondere im Zusammenhang mit der Ausführungsform nach Figur 2 ist der Einsatz einer Bremszuspannkraft-Sensoreinrichtung vorteilhaft, wie sie in Figur 3 im Zusammenhang mit den Figuren 4 und 5 wiedergegeben ist. Man erkennt in diesen Figuren eine Bremsbelag-Halteeinrichtung 7, die an dem Bremshebel 4 mit den Lagerstellen 5 und 6 angebracht ist. Auf der Bremsbelag-Halteeinrichtung 7 ist der Bremsbelag 8 aufgebracht. Eine Hängelasche 10 mit einer in der Figur 3 nicht gezeigten Bremszuspannkraft-Sensoreinrichtung ist einerseits auch hier an einer unteren Aufhängevorrichtung 9 und einer oberen Aufhängevorrichtung 12 drehbar befestigt, die an dem Hebel 13 schwenkbar gehalten ist.

Wie insbesondere Figur 4 erkennen lässt, ist die Bremszuspannkraft-Sensoreinrichtung 41 mit einem Referenzteil 42 versehen, das hier an dem Hebel 13 bzw. der unteren Aufhängung 9 einerseits mit seinem Ende 43 befestigt ist. Das andere Ende 44 des Referenzteils 42 ist frei. Die Hängelasche 10 trägt eine Markierung 45, die achsparallel auf der Hängelasche 10 verläuft. Es lässt sich somit ein Winkel β ermitteln, der dem Verschwenken der Hängelasche 10 gegenüber der oberen Aufhängung 12 bzw. dem Hebel 13 proportional und damit auch der Bremszuspannkraft Fn proportional ist. Eine erste Sensoreinheit 46 auf dem Referenzteil 42 und eine weitere, in Fig. 4 darunter befindliche Sensoreinheit auf der Hängelasche 10 bilden die Bremszuspannkraft-Sensoreinrichtung 41, die eine der Bremszuspannkraft proportionale Bremszuspannkraft-Messgröße für die Bremssteuereinrichtung zur Verfügung stellt.

Bei dem Ausführungsbeispiel nach Figur 5 befindet sich ein Referenzteil 50 auf der Hängelasche 10, während eine Markierung 51 auf der oberen Aufhängung 12 oder auf dem Hebel 13 angebracht ist. Auch hier lässt sich ein Winkel β ablesen und durch eine erste Sensoreinheit 52 auf dem Referenzteil 50 und eine in Fig. 5 darunter angeordnete weitere Sensoreinheit in eine der Bremszuspannkraft entsprechende Messgröße umsetzen. Aus dem ermittelten Winkel bzw. der Zustellbewegung kann die Bremszuspannkraft Fn abgeleitet werden, da diese mit der Zustellbewegung unmittelbar in Beziehung steht. Mit zunehmendem Zustellweg bzw. größer werdendem Winkel β erhöht sich die Bremszuspannkraft Fn.

Bei der erfindungsgemäßen Scheibenbremsvorrichtung lassen sich also nicht nur Bremsmomente bestimmen, sondern auch Bremszuspannkräfte, was sich vorteilhaft auf die Steuerung von Bremsen bei hochdynamischen Vorgängen positiv auswirkt.

## Patentansprüche

1. Bremsvorrichtung mit beiderseits eines Bremsorgans (3) angeordneten Bremsbelag-Halteeinrichtungen (7,9), die jeweils mittels mindestens einer Hängelasche (10,11) aufgehängt sind,
**dadurch gekennzeichnet, dass**
die mindestens eine Hängelasche (10,11) an ihrem von der Bremsbelag-Halteeinrichtung (7,9) abgewandten Ende mit einem freien Ende eines Hebels (13) verbunden ist, der an einer Anbringungseinrichtung (2) der Bremsvorrichtung gelagert ist, und eine Verbiegungen des Hebels (13) erfassende Bremsmoment-Sensoreinrichtung (16) vorhanden ist.

2. Bremsvorrichtung nach Anspruch 1,
**dadurch gekennzeichnet, dass**
der Hebel (13) drehfest an der Anbringungseinrichtung (2) befestigt ist und
die Bremsmoment-Sensoreinrichtung (16) an dem Hebel (13) zwischen dessen freien Ende und seiner Lagerung (14) befestigt ist.

3. Bremsvorrichtung nach Anspruch 2,
**dadurch gekennzeichnet, dass**
die Lagerung (14) drehweich ist.

4. Bremsvorrichtung nach einem der vorangehenden Ansprüche,
**dadurch gekennzeichnet, dass**
die Bremsmoment-Sensoreinrichtung (16) ein Referenzelement (17) aufweist, mit dem Verbiegungen des Hebels (13) gegenüber dem Referenzelement (17) feststellbar sind.

5. Bremsvorrichtung nach Anspruch 4,
**dadurch gekennzeichnet, dass**
das Referenzelement (17) einseitig in der Nähe des Lagers (14) des Hebels (13) befestigt ist.

6. Bremsvorrichtung nach Anspruch 5,
**dadurch gekennzeichnet, dass**
das Referenzelement (17) an seinem freien Ende mit einem ersten Sensorelement (21) und der Hebel (13) an seinem Ende mit einem weiteren Sensorelement unter Bildung der Bremsmoment-Sensoreinrichtung (16) derart versehen ist, dass eine dem jeweiligen Winkel zwischen dem Referenzelement (17) und dem Hebel (13) entsprechende Bremsmoment-Messgröße erzeugbar ist.

7. Bremsvorrichtung nach Anspruch 1,
**dadurch gekennzeichnet, dass**
der Hebel (30) drehbar in dem Lager (14) gelagert ist,
der Hebel (30) einen über sein Lager (14) hinaus reichenden Hebelfortsatz (33) umfasst, der an seinem Ende an der Anbringungseinrichtung (2) abgestützt ist, und
die Verbiegungen des Hebels (30) erfassende Bremsmoment-Sensoreinrichtung (32) an dem Hebelfortsatz (33) angebracht ist.

8. Bremsvorrichtung nach Anspruch 7,
**dadurch gekennzeichnet, dass**
das Referenzelement (34) einseitig in der Nähe des Lagers (14) des Hebels (30) auf dem Hebelfortsatz (33) befestigt ist.

9. Bremsvorrichtung nach Anspruch 8,
**dadurch gekennzeichnet, dass**
das Referenzelement (34) an seinem freien Ende mit einem ersten Sensorelement (39) und der Hebelfortsatz (33) in der Nähe seines abgestützten Endes mit einem zusätzlichen Sensorelement unter Bildung der Bremsmoment-Sensoreinrichtung (32) derart versehen ist, dass eine dem jeweiligen Winkel zwischen dem Referenzelement (34) und dem Hebelfortsatz (33) entsprechende Bremsmoment-Messgröße erzeugbar ist.

10. Bremsvorrichtung nach einem der Ansprüche 7 bis 9,
**dadurch gekennzeichnet, dass**
das erste Sensorelement (39) in das Referenzelement (34) integriert ist.

11. Bremsvorrichtung nach einem der vorangehenden Ansprüche,
**dadurch gekennzeichnet, dass**
die Bremsmoment-Sensorvorrichtung eine opto-elektronische Sensorvorrichtung oder eine Halleffekt-Sensorvorrichtung ist.

12. Bremsvorrichtung nach einem der Ansprüche 4 bis 10,
**dadurch gekennzeichnet, dass**
der Hebelfortsatz an seinem Ende mittels eines Kraftmessbolzens abgestützt ist.

13. Bremsvorrichtung nach einem der vorangehenden Ansprüche,
**dadurch gekennzeichnet, dass**
eine Bremszuspannkraft-Sensorvorrichtung vorgesehen ist, die eine dem Ausmaß des Verschwenkens einer Hängelasche in Bezug auf den Hebel entsprechende Bremszuspannkraft-Messgröße erzeugt.

14. Bremsvorrichtung nach Anspruch 13,
**dadurch gekennzeichnet, dass**
die Bremszuspannkraft-Sensorvorrichtung (41) ein Referenzteil (42) aufweist, mit dem das Ausmaß des Verschwenkens der Hängelasche (10) in Bezug auf den Hebel (30) feststellbar ist

15. Bremsvorrichtung nach Anspruch 14,
**dadurch gekennzeichnet, dass**
das Referenzteil (42) einseitig mit dem Hebel (30) verbunden ist.

16. Bremsvorrichtung nach Anspruch 15,
**dadurch gekennzeichnet, dass**
das Referenzteil (42) an seinem freien Ende (44) mit einer ersten Sensoreinheit (46) und die Hängelasche (10) mit einer weiteren Sensoreinheit unter Bildung der Bremszuspannkraft-Sensorvorrichtung (41) derart versehen ist, dass eine dem jeweiligen Winkel zwischen dem Referenzteil (42) und der Hängelasche (10) entsprechende Bremszuspannkraft-Messgröße erzeugbar ist.

17. Bremsvorrichtung nach Anspruch 14,
**dadurch gekennzeichnet, dass**
das Referenzteil (50) einseitig an der Hängelasche (10) angebracht ist.

18. Bremsvorrichtung nach Anspruch 17,
**dadurch gekennzeichnet, dass**
das Referenzteil (50) an seinem freien Ende mit der ersten Sensoreinheit (52) und der Hebel (13) mit der weiteren Sensoreinheit unter Bildung der Bremszuspannkraft-Sensorvorrichtung derart versehen ist, dass eine dem jeweiligen Winkel zwischen dem Referenzteil (50) und der Hängelasche (10) entsprechende Bremszuspannkraft-Messgröße erzeugbar ist.

19. Bremsvorrichtung nach einem der Ansprüche 16 oder 18,
**dadurch gekennzeichnet, dass**
die erste Sensoreinheit in das Referenzteil integriert ist.

20. Bremsvorrichtung nach einem der Ansprüche 13 bis 19,
**dadurch gekennzeichnet, dass**
die Bremszuspannkraft-Sensorvorrichtung eine opto-elektronische Sensorvorrichtung oder eine Halleffekt-Sensorvorrichtung ist.

21. Bremsvorrichtung nach einem der vorangehenden Ansprüche,
**dadurch gekennzeichnet, dass**
die Bremsmoment-Sensoreinrichtung und/oder die Bremzuspannkraft-Sensorvorrichtung mit einer Funkeinheit versehen sind.

22. Bremsvorrichtung nach einem der vorangehenden Ansprüche,
**dadurch gekennzeichnet, dass**
die Bremsvorrichtung als Klotzbremsvorrichtung ausgebildet ist, indem das Bremsorgan von der Lauffläche eines Rades gebildet ist.

23. Bremsvorrichtung nach einem der Ansprüche 1 bis 21,
**dadurch gekennzeichnet, dass**
die Bremsvorrichtung als Scheibenbremsvorrichtung ausgebildet ist, indem das Bremsorgan von einer Bremsscheibe gebildet ist.

## Claims

1. Braking system having brake lining retaining devices (7,9) which are disposed on either side of a braking element (3) and are each suspended by means of at least one suspension bracket (10,11), **characterised in that**
the at least one suspension bracket (10,11) is connected at its end facing away from the brake lining retaining device (7,9) to a free end of a lever (13) which is mounted on a mounting device (2) of the braking system, and a brake torque sensor device (16) which detects deflection of the lever (13) is present.

2. Braking system according to claim 1,
**characterised in that**
the lever (13) is non-rotatably fixed to the mounting device (2) and
the brake torque sensor device (16) is fixed to the lever (13) between the free end thereof and its bearing arrangement (14).

3. Braking system according to claim 2,
**characterised in that**
the bearing arrangement (14) is torsionally soft.

4. Braking system according to one of the preceding claims,
**characterised in that**
the brake torque sensor device (16) has a reference element (17) which enables deflections of the lever (13) with respect to the reference element (17) to be determined.

5. Braking system according to claim 4,
**characterised in that**
the reference element (17) is unilaterally fixed in proximity to the bearing (14) of the lever (13).

6. Braking system according to claim 5,
**characterised in that** the reference element (17) is provided, at its free end, with a first sensor element (21) and the lever (13), at its end, with another sensor element to form the brake torque sensor device (16) in such a way that a brake torque measured variable corresponding to the respective angle between the reference element (17) and the lever (13) can be generated.

7. Braking system according to claim 1,
**characterised in that**
the lever (30) is rotatably mounted in the bearing (14),
the lever (30) comprises a lever extension (33) extending beyond its bearing (14) and supported at its end on the mounting device (2), and
the brake torque sensor device (32) detecting deflections of the lever (30) is mounted on the lever extension (33).

8. Braking system according to claim 7,
**characterised in that**
the reference element (34) is unilaterally fixed to the lever extension (33) in proximity to the bearing (14) of the lever (30).

9. Braking system according to claim 8,
**characterised in that**
the reference element (34) is provided at its free end with a first sensor element (39) and the lever extension (33) in proximity to its supported end with an additional sensor element to form the brake torque sensor device (32) in such a way that a brake torque measured value corresponding to the respective angle between the reference element (34) and the lever extension (33) can be generated.

10. Braking system according to one of claims 7 to 9,
**characterised in that**
the first sensor element (39) is incorporated in the reference element (34).

11. Braking system according to one of the preceding claims,
**characterised in that**
the brake torque sensor device is an optoelectronic sensor device or a Hall effect sensor device.

12. Braking system according to one of claims 4 to 10,
**characterised in that**
the lever extension is supported at its end by means of a force sensing bolt.

13. Braking system according to one of the preceding claims,
**characterised in that**
a brake application force sensor device is provided which generates a brake application force measured variable corresponding to the extent of pivoting of a suspension bracket in relation to the lever.

14. Braking system according to claim 13,
**characterised in that**
the brake application force sensor device (41) has a reference section (42) with which the extent of pivoting of the suspension bracket (10) in relation to the lever (30) can be determined.

15. Braking system according to claim 14,
**characterised in that**
the reference section (42) is unilaterally connected to the lever (30).

16. Braking system according to claim 15,
**characterised in that**
the reference section (42) is provided at its free end (44) with a first sensor unit (46) and the suspension bracket (10) with another sensor unit to form the brake application force sensor device (41) in such a way that a brake application force measured variable corresponding to the respective angle between the reference section (42) and the suspension bracket (10) can be generated.

17. Braking system according to claim 14,
**characterised in that**
the reference section (50) is unilaterally mounted on the suspension bracket (10).

18. Braking system according to claim 17,
**characterised in that**
the reference section (50) is provided at its free end with the first sensor unit (52) and the lever (13) with another sensor unit to form the brake application force sensor device in such a way that a brake application force measured variable corresponding to the respective angle between the reference section (50) and the suspension bracket (10) can be generated.

19. Braking system according to one of claims 16 or 18,
**characterised in that**
the first sensor unit is incorporated in the reference section.

20. Braking system according to one of claims 13 to 19,
**characterised in that**
the brake application force sensor device is an optoelectronic sensor device or a Hall effect sensor device.

21. Braking system according to one of the preceding claims,
**characterised in that**
the brake torque sensor device and/or the brake application force sensor device are provided with a radio unit.

22. Braking system according to one of the preceding claims,
**characterised in that**
the braking system is implemented as a tread brake device **in that** the braking element is constituted by a wheel tread.

23. Braking system according to one of claims 1 to 21,
**characterised in that**
the braking system is implemented as a disk brake system **in that** the braking element is constituted by a brake disk.

## Revendications

1. Système de freinage comprenant des dispositifs (7, 9) de maintien de garniture de frein, disposés de part et d'autre d'un organe (3) de freinage et suspendus respectivement au moyen d'une patte (10, 11) de suspension,
**caractérisé en ce que**
la au moins une patte (10, 11) de suspension est reliée, à son extrémité éloignée du dispositif (7, 9) de maintien de la garniture de frein, à une extrémité d'un levier (13), qui est monté sur un dispositif (2) de montage du système de frein, et il y a un dispositif (16) de capteur de couple de freinage détectant une déformation du levier (13).

2. Système de freinage suivant la revendication 1,
**caractérisé en ce que**
le levier (13) est fixé fixe en rotation au dispositif (2) de montage et
le dispositif (16) de capteur de couple de freinage est fixé au levier (13), entre l'extrémité libre de celui-ci et son palier (14).

3. Système de freinage suivant la revendication 2,
**caractérisé en ce que**
le palier (14) est souple en rotation.

4. Système de freinage suivant l'une des revendications précédentes,
**caractérisé en ce que**
le dispositif (16) de capteur de couple de freinage a un élément (17) de référence, par lequel des déformations du levier (13) par rapport à l'élément (17) de référence peuvent être constatées.

5. Système de freinage suivant la revendication 4,
**caractérisé en ce que**
l'élément (17) de référence est fixé d'un seul côté au voisinage du palier (14) du levier (13).

6. Système de freinage suivant la revendication 5, **caractérisé en ce que**
l'élément (17) de référence est pourvu, à son extrémité libre, d'un premier élément (21) de capteur et le levier (13) est pourvu à son extrémité d'un autre élément de capteur, en formant le dispositif (16) capteur de couple de freinage, de manière à pouvoir produire une grandeur de mesure de couple de freinage correspondant à l'angle respectif entre l'élément (17) de référence et le levier (13).

7. Système de freinage suivant la revendication 1,
**caractérisé en ce que**
le levier (30) est monté tournant dans le palier (14),
le levier (30) comprend un prolongement (33) de levier, allant au-delà de son palier (14) et appuyé à son extrémité sur le dispositif (2) de montage, et
un dispositif (32) de capteur de couple de rotation détectant les déformations du levier (30) est monté sur le prolongement (33) du levier.

8. Système de freinage suivant la revendication 7,
**caractérisé en ce que**
l'élément (34) de référence est fixé, d'un côté au voisinage du palier (14) du levier (30), au prolongement (33) du levier.

9. Système de freinage suivant la revendication 8,
**caractérisé en ce que**
l'élément (34) de référence est pourvu, à son extrémité libre, d'un premier élément (39) de capteur et le prolongement (33) du levier est pourvu, à proximité de son extrémité soutenue, d'un élément de capteur supplémentaire, en formant le dispositif (32) de capteur de couple de freinage, de manière à pouvoir produire une grandeur de mesure de couple de freinage correspondant à l'angle respectif entre l'élément (34) de référence et le prolongement (33) du levier.

10. Système de freinage suivant l'une des revendications 7 à 9,
**caractérisé en ce que**
le premier élément (39) de capteur est intégré dans l'élément (34) de référence.

11. Système de freinage suivant l'une des revendications précédentes,
**caractérisé en ce que**
le dispositif capteur de couple de freinage est un dispositif capteur optoélectronique ou un dispositif capteur à effet Hall.

12. Système de freinage suivant l'une des revendications 4 à 10,
**caractérisé en ce que**
le prolongement du levier est soutenu à son extrémité au moyen d'un dynamomètre.

13. Système de freinage suivant l'une des revendications précédentes,
**caractérisé en ce qu'**
il est prévu un dispositif capteur de force de serrage de frein, qui produit une grandeur de mesure de force de serrage de frein correspondant à l'étendue de pivotement d'une patte de suspension par rapport au levier.

14. Système de freinage suivant la revendication 13,
**caractérisé en ce que** le dispositif (41) capteur de force de serrage du frein a une partie (42) de référence, par lequel l'étendue du pivotement de la patte (10) de suspension, par rapport au levier (30), peut être constatée.

15. Système de freinage suivant la revendication 14,
**caractérisé en ce que**
la partie (42) de référence est reliée d'un côté au levier (30).

16. Système de freinage suivant la revendication 15,
**caractérisé en ce que**
l'élément (42) de référence est pourvu, à son extrémité (44) libre, d'une première unité (46) de capteur et la patte (10) de suspension est pourvue d'une autre unité de capteur, en formant le dispositif (41) capteur de force de serrage du frein, de manière à pouvoir produire une grandeur de mesure de force de serrage du frein correspondant à l'angle respectif entre la partie (42) de référence et la patte (10) de suspension.

17. Système de freinage suivant la revendication 14,
**caractérisé en ce que**
la partie (50) de référence est montée d'un côté sur la patte (10) de suspension.

18. Système de freinage suivant la revendication 17,
**caractérisé en ce que**
la partie (50) de référence est pourvue à son extrémité libre de la première unité (52) de capteur et le levier (13) est pourvu de l'autre unité de capteur, en formant le dispositif (41) capteur de force de serrage du frein, de manière à pouvoir produire une grandeur de mesure de la force de serrage du frein, correspondant à l'angle respectif entre la partie (50) de référence et la patte (10) de suspension.

19. Système de freinage suivant l'une des revendications 16 ou 18,
**caractérisé en ce que**
la première unité de capteur est intégrée dans la partie de référence.

20. Système de freinage suivant l'une des revendications 13 à 19,
**caractérisé en ce que**
le dispositif capteur de force de serrage du frein est un dispositif capteur optoélectronique ou un dispositif capteur à effet Hall.

21. Système de freinage suivant l'une des revendications précédentes,
**caractérisé en ce que**
le dispositif capteur de couple de freinage et/ou le dispositif capteur de force de freinage du frein sont pourvus d'une unité radio.

22. Système de freinage suivant l'une des revendications précédentes,
**caractérisé en ce que** le système de freinage est constitué en système de frein à sabot, par le fait que l'organe de freinage est formé par la surface de roulement d'une roue.

23. Système de freinage suivant l'une des revendications 1 à 21,
**caractérisé en ce que**
le système de freinage est constitué sous la forme d'un système de freinage à disque, par le fait que l'organe de freinage est formé d'un disque de frein.
